# EUROPEAN PATENT SPECIFICATION

(11) **EP 3 122 681 B1**
(45) Date of publication and mention of the grant of the patent: **25.09.2019**
(21) Application number: 15769514.9
(22) Date of filing: 26.03.2015
(51) Int. Cl.: B66B 23/00

(54) **LATERAL DAMPING AND INTERMEDIATE SUPPORT FOR ESCALATORS AND MOVING WALKS IN SEISMIC EVENTS**
LATERALE DÄMPFUNG UND ZWISCHENAUFLAGER FÜR AUFZÜGE UND FAHRSTEIGE BEI SEISMISCHEN EREIGNISSEN
AMORTISSEMENT LATÉRAL ET SUPPORT INTERMÉDIAIRE POUR DES ESCALIERS MÉCANIQUES ET DES TROTTOIRS ROULANTS LORS D'ÉVÉNEMENTS SISMIQUES

(30) Priority: 28.03.2014 US 201461971805 P
(43) Date of publication of application: 01.02.2017
(73) Proprietor: Inventio AG, 6052 Hergiswil (CH)
(72) Inventor: EVANS, David, Clayton, NC 27527 (US); KRAMPL, David, AT-1100 Wien (AT); MATHEISL, Michael, AT-2331 Vosendorf (AT)
(86) International application number: PCT/US2015/022661
(87) International publication number: WO 2015/148762

(56) References cited:
- JP-A- H10 194 646
- JP-A- 2000 095 471
- JP-A- 2009 107 760
- JP-A- 2011 063 389
- JP-A- 2011 063 390
- JP-A- 2013 245 084
- US-A- 2 664 990
- US-A- 3 368 496
- US-A- 4 413 719
- US-B1- 6 637 580

## Description

### Technical Field

The present disclosure relates generally to the field of escalators and moving walks, and more particularly to a connection device and structure that provides both lateral damping and intermediate support to an escalator or moving walks when such an escalator or moving walk is subjected to displacement, and in particular, to "story drift" displacement caused by a seismic event or earthquake.

### Background

Prior art moving walks or escalators typically include a support truss and a plurality of interconnected steps or flat links that travel in a loop within the truss to provide a continuous movement along a specified path. When the escalator or moving walk assembly is appropriately mounted between the floors of a building, relative motion exists between the moving steps and the stationary structure of the conveyor system. If the escalator or moving walk assembly is rigidly mounted between the adjacent floors of a building, or between two separate buildings or structures, and no provision is made for relative movement between the escalator or moving walk assembly and the building structure, failures can occur during earthquakes or seismic events.

For this reason various states, including California, have adopted specific seismic requirements for escalators and moving walks. Such statutes have often included requirments with respect to movement relative to a single floor ("lateral drift"), but more recently have become more focused on interfloor movement ("story drift"). In this regard, California Code has recently been amended to take into account potential story drift events, and specifically, the use of intermediate supports in connection therewith (see California Code Sec. 3137 (d)(2)(C) - "Seismic restraint shall be provided in the transverse direction at all supports. Intermediate supports, if any, shall be free to move laterally in all directions.")

In order to address such circumstances, there have been a multitude of prior art escalator and/or moving walk designs that have been designed to accommodate aspects of story drift that may occurs during seismic events. For example, U.S. Patent No. 6,129,198 to Inventio AG discloses an escalator assembly having a bed support which is in turn supported upon a bed formed as part of the building construction by a resilient mounting element which provides damping for vibration and the like passing between the escalator and building construction. A second end of the carrier is similarly provided with a bed support which is supported upon a fulcrum firmly mounted to the bed. The fulcrum may be in the form of a screw upon which the bed support is detented and damping means may be incorporated into the fulcrum construction.

Conversely, U.S. Pat. No. 6,637,580 to Sneed discloses a telescoping assembly for an escalator mount that allows movement of the escalator relevant to the portions of the building it is mounted in a longitudinal direction. Further, the center portion of the mount includes a sill plate that is mounted on a pivot to allow for story drift-type movement.

Another prior art escalator structure that has been proposed to accommodate story drift requirements caused by earthquakes is disclosed in U.S. Pat. No. 6,129,198 to Nusime. The Nusime patent discloses an escalator assembly wherein a first end of the carrier is provided with a bed support which is in turn supported upon a bed formed as part of the building construction by a resilient mounting element which provides damping for vibration and the like passing between the escalator and building construction. A second end of the carrier is similarly provided with a bed support, which is supported upon a fulcrum firmly mounted to the bed. The fulcrum may be in the form of a screw upon which the bed support is detented. Damping means may be incorporated into the fulcrum construction.

JP 2013 245084 A discloses an escalator support structure which allows relative movements in sideway directions within the support structure in case of an earthquake. Telescopic couplers are integrated in the structure to guide the relative movement. A similar construction is disclosed in JP H10 194646 A for the escalator mounts.

While all of the foregoing disclosed, and other, prior art structures may have utility in addressing issues with story drift in escalators and moving walks during seismic events, it is still desired to have an escalator or moving walk support structure that provides adequate desired intermediate support for the escalator or moving walk, is relatively simple in design and cost effective in implementation, and which effectively accomodates "story drift" movement that may occur during earthquakes or other seismic events.

### Summary

The present disclosure is directed to an intermediate support structure for an escalator or moving walk that allows at least some amount of free lateral movement of the escalator truss or moving walk truss in all directions during an earthquake or a seismic event. The movement in the horizontal directions is particularly necessary to allow some amount of free lateral movement to prevent significant damages when building story drift occurs.

More specifically, the present disclosure discloses the use of a dampening device, in connection with an intermediate support having slots therein, that allow the supported escalator or moving walk truss to be free to move laterally in all directions to accommodate lateral displacement of the upper support due to story drift while simultaneously controlling lateral deflection and oscillation along the length of the truss. The structure according to the present disclosure thus allows for desired movement while simultaneously preventing excessive stress level in the truss members.

More specifically, the present disclosure provides an escalator or moving walk support structure including a truss support having lateral slots therein, an intermediate vertical member having a first end and a second end, wherein the intermediate vertical member is connected to the truss support through the slots and to the building support at the second end, such that once a predetermined coefficient of friction is overcome, the intermediate vertical member is free to move laterally with respect to the truss support.

In accordance with the foregoing, the intermediate vertical member may be connected to the building support between two resilient buffers and/or the second end of the intermediate vertical member may be connected to the building support between two angle brackets. The intermediate vertical support may include a foot attached that is connected to a first sliding plate by connection screws extending through the sliding plate and the lateral slots.

The escalator or moving walk support structure may also include side posts arranged at each lateral end of the truss support so that the side posts bear vertical forces acting on the support structure, and further includes plate bearings below the side posts to allow lateral movement of the side posts relative to the building support. The support structure may also include a second sliding plate and the truss support may comprise an I beam. Additionally, the truss support may include a first fixed plate on a bottom side of the bottom portion of the truss support and a second fixed plate on a top side of a bottom portion of the truss support such that the first sliding plate is attached to the first fixed plate and the second sliding plate is attached to the second fixed plate.

In accordance with the disclosure, the first and second sliding plates of the escalator or moving walk support may be connected by connection screws, they may be screwed to a tightening torque of between about 40Nm and 80Nm, and they may be made of any suitable materials, including, but not limited to stainless steel, brass, copper, PTFE coated sheet materials, or white metal.

In an alternate embodiment of the disclosure, the escalator or moving walk support structure may include a truss support, an intermediate vertical member having a first end and a second end, wherein the first end is attached to the truss support and the second end is connected to at least one mounting bracket, the mounting bracket having at least one slot therein for receiving at least one connection screw for connecting the mounting bracket to a building support, a joint plate positioned between the mounting bracket and the building support, wherein the connection screw is connected to the building support such that once a predetermined coefficient of friction is overcome, the intermediate vertical member is free to move laterally with respect to the bracket.

### Brief Description of the Drawings

Fig. 1 depicts a front elevation view of an intermediate mounting structure for an escalator or moving walk assembly according to an aspect of the disclosure;
Fig. 2 depicts a side elevation view of the intermediate mounting structure of Fig. 1;
Fig. 3 depicts a top plan view of the intermediate mounting structure of Fig. 1; and
Fig. 4 depicts a front elevation view of a further embodiment of an intermediate mounting structure in accordance with the disclosure.

### Detailed Description

There has thus been outlined, rather broadly, certain aspects of the disclosure in order that the detailed description thereof herein may be better understood, and in order that the present contribution to the art may be better appreciated. There are, of course, additional aspects of the disclosure that will be described below and which will form the subject matter of the claims appended hereto.

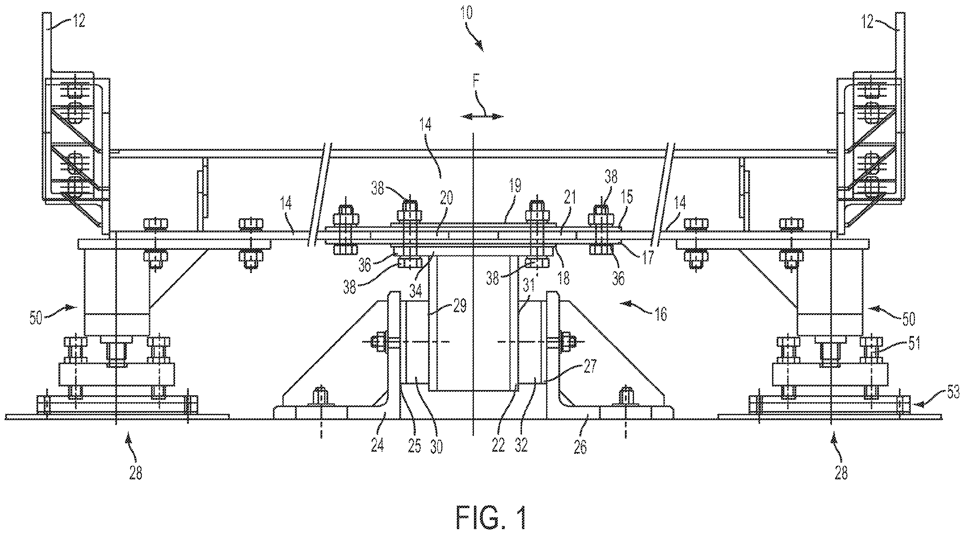

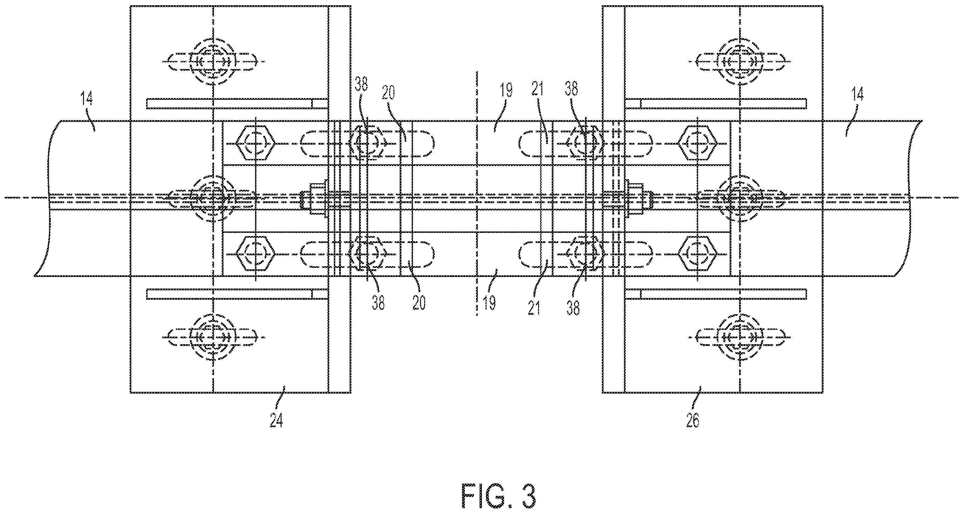

As shown best in Figs. 1 and 3, the present disclosure is directed to a support structure 10 for an escalator or moving walk 12 that allows at least some amount of free lateral movement of the truss support 14 in all directions during an earthquake or a seismic event. More specifically, the present disclosure discloses the use of a dampening device 16, in connection with the truss support 14 vertical member 22. As is known in the art, the truss support 14 may be an "I" beam structure and may include upper 15 and lower 17 fixed plates. The truss support 14 and fixed plates 15, 17 are provided with slots 20, 21 therein that allow the supported truss support 14 to be free to move laterally to accommodate lateral displacement of the escalator or moving walk 12 upper support (not shown) due to story drift while simultaneously controlling lateral deflection and oscillation along the length of the escalator or moving walk 12. The support structure 10 according to the present disclosure thus allows for desired movement while simultaneously preventing excessive stress level in the truss members (not shown).

More specifically, the intermediate support vertical member 22, which may be an "I" beam structure, may be attached to the underside of the truss support 14. The lower portion of the dampening device 16 may be constructed to "trap" the vertical member 22 between two angle brackets 24, 26 mounted to the building support 28. Resilient buffers 30, 32, which may be made from any desired material such as rubber, may be attached to each of the faces 25, 27 of the angle brackets 24, 26 adjacent to the vertical faces 29, 31 of the vertical member 22. Vertical member 22 preferably includes a foot 34, which may be attached to the truss support 14 through at least one sliding plate 18 which form one portion of the slip joint connection. In accordance with an embodiment hereof, at least a second sliding plate 19 or low friction washer may be positioned on an opposite side of the truss support 14 to comprise a second portion of the slip joint connection. The sliding plates 18, 19 may be made of any suitable material including stainless steel, brass, copper, PTFE coated sheet materials, white metal, and/or other suitable materials.

Vertical forces of the escalator or moving walk 12 are supported by side posts 50 which are arranged at each side of the truss support 14. The high of the side posts 50 is adjustable by adjustment screws 51. To allow free lateral movement of the side posts 50 relative to the building support 28, the side posts 50 may comprise plate bearings 53. As shown in the present example, the adjustment screws 51 can move together with the side posts 50.

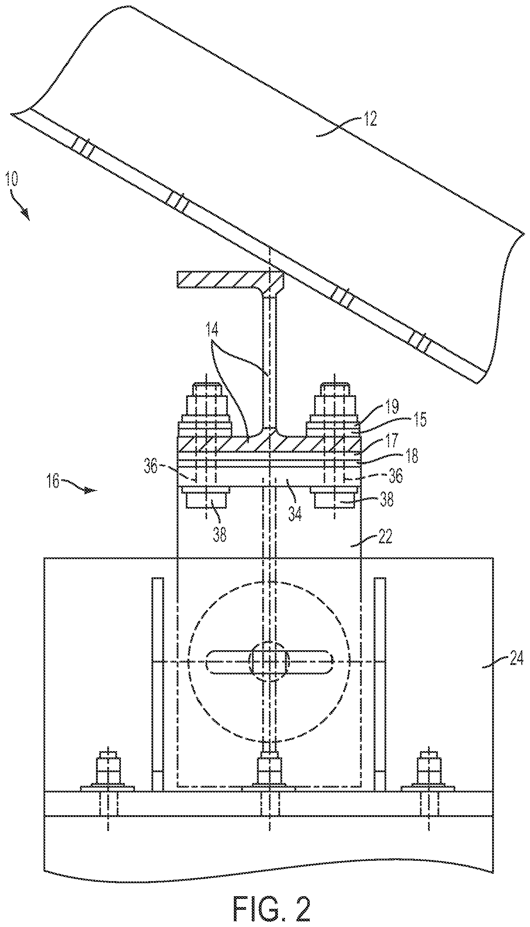

The foot 34 of the vertical member 22 and sliding plates 18, 19 may have four clearance holes 36 for receiving the connecting screws 38. As best shown in Figs. 1-3, the truss support 14 and fixed plates 17, 15 have slots 20, 21 running in the lateral direction to allow for the desired lateral movement. Thus, in accordance with an embodiment hereof, the connecting screws 38 may be received through holes 36 and then may extend through the sliding plate 18, the slots 20, 21 in fixed plate 17, the truss support 14, and the fixed plate 15, and then finally through the holes 36 in sliding plate 19 to make the desired connection. The connecting screws 38 may be installed with a setting torque in order to provide a specifically calculated and desired clamping force between the sliding plates 18 and 19 and the corresponding fixed plates 17 and 15.

More specifically, the torque of the connecting screws 38 may be set so that the oscillation and lateral deflection along the length of truss support 14 during a seismic event is properly controlled. In accordance herewith, the escalator or moving walk 12 may be buffered from some undersirable oscillation during a seismic event or earthquake. Conversely, in the case of story drift, the slip joint connection comprised of the sliding plates 18, 19 and fixed plates 17, 15 becomes flexible, due to overcoming friction between the respective plates, thus allowing desired lateral movement of the truss support 14.

In accordance with the disclosure, the connection of the vertical member 22 and the truss support 14 must be set so that the slip joint connection can accommodate lateral movement for story drift while also dampening oscillation throughout the truss (not shown) in a seismic event. This requirement may be achieved by pre-loading the connecting screws 38 (which may be standard M20 fasteners as is known in the art) used for connecting the sliding plates 18, 19 and fixed plates 17, 15 to produce the desired friction therebetween. In practice, it may be desirable to use stainless steel for the sliding plates 18,19 to help prevent corrosion which may detrimentally effect the coefficient of friction between the sliding plates 18, 19 and fixed plates 17, 15.

For purposes of explanation, the transmitted horizontal force (F) from the truss support 14 beam to the resilient buffers 30, 32 may be assumed to be approximately 31kN. Using the standard expression F=u^{∗}N to calculate the preload force (N) required in each of the connecting screws 38, and modifying it appropriately to take into account that the slip joint connection may be comprised of 2 separate sliding connections between the respective sliding plates 18, 19 and fixed plates 17, 15, the expression may be modified to: F=u^{∗}N^{∗}s where s = number of sliding connections. The coefficient of friction (u) for steel against steel between the faces of the stainless steel plates may be assumed to be approximately 0.2. The normal force N per screw may thus be calculated as N = F/(4^{∗}s^{∗}u), in this case, therefore N = 31kN/4x0.21x2 = 18.45kN. According to this, in one embodiment of the disclosure, this force may be used as the required pre-load in each connecting screw 38. It should be noted, however, that to determine the values above, friction forces occuring between the plate bearings 53 and the side posts 50 are not taken into account.

In accordance with one embodiment of the disclosure, connecting screws 38 may be M20 standard metric fasteners with grade 8.8. For this screw size and grade the following data is assumed to be valid: maximum pre-load = 117000N; maximum tightening torque = 390Nm. Accordingly, assuming such parameters, the pre-load per Nm torque may be calculated as follows 117000N/390Nm = 300N/Nm. In accordance therewith, the tightening torque setting required per connection screw 38 may be calculated as 18450N/300N/Nm = 61.5 Nm.

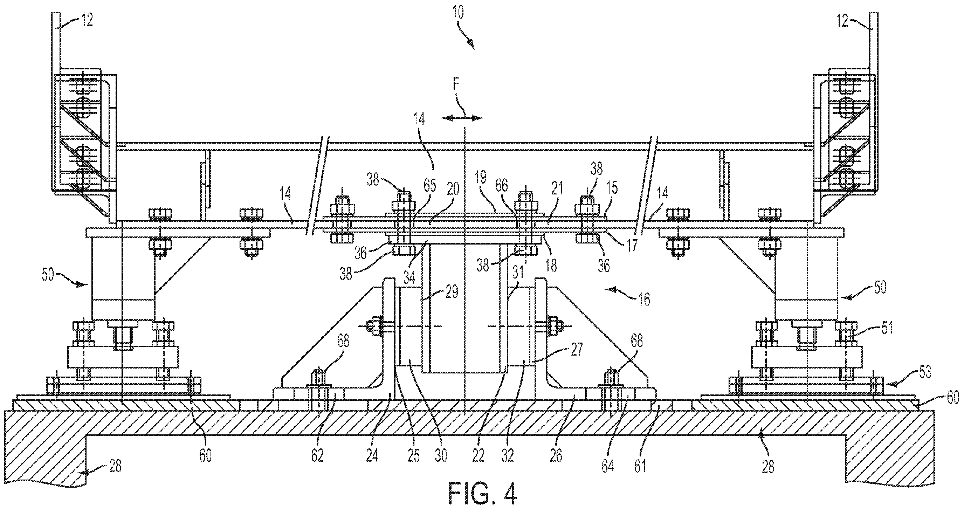

As shown best in Fig. 4, an alternate embodiment of the present disclosure may incorporate sheet plates 60 and a joint plate 61 to accommodate potential story drift as discussed above. In accordance with this embodiment, lateral movement may be accommodated between the truss support 14 and the building support 28 by slots 62, 64 formed in the brackets 24, 26. In accordance therewith, slots 20, 21 in the fixed plates 15, 17 are replaced with corresponding holes 65, 66 thereby preventing lateral movement of the truss support 14 with respect to angle brackets 24, 26. Instead, as will be readily understood by those of ordinary skill in the art, the lateral movement is allowed between angle brackets 24, 26 and joint plate 61 through the use of slots 62, 64. Further in accordance with this embodiment, low torque bolts 68 may be used to secure angle brackets 24, 26 to building support 28 through joint plate 61. In order to facilitate such desired movement during seismic events, as well as to prevent corrosion of friction surfaces, lubrication may be provided between the joint plate 61 and angle brackets 24, 26.

The many features and advantages of the disclosure are apparent from the detailed specification, and, thus, it is intended by the appended claims to cover all such features and advantages of the disclosure which fall within the true spirit and scope of the disclosure. For example, all surfaces of sliding plates may be lubricated with oil or grease to reduce the friction coefficient between the friction members and to prevent corrosion of the friction surfaces. Further, since numerous modifications and variations will readily occur to those skilled in the art, it is not desired to limit the disclosure to the exact construction and operation illustrated and described, and, accordingly, all suitable modifications and equivalents may be resorted to that fall within the scope of the disclosure.

## Claims

1. An escalator or moving walk support structure (10) comprising:
an escalator or moving walk truss support (14), said truss support (14) having lateral slots (22, 21) therein;
an intermediate vertical member (22) having a first end and a second end, said intermediate vertical member (22) connected to said truss support (14) through said slots (20, 21) at said first end thereof and to a building support (28) at said second end thereof such that once a predetermined coefficient of friction is overcome, said intermediate vertical member (22) is free to move laterally with respect to said truss support (14), **characterized in, that** said first end of said intermediate vertical support (22) includes a foot (34) attached thereto, said foot (34) being connected to a first sliding plate (18) by connection screws (38) extending through the sliding plate (18) and said lateral slots (20, 21).

2. The escalator or moving walk support structure (10) of claim 1 further comprising a second sliding plate (19).

3. The escalator or moving walk support structure (10) of claim 1 wherein said truss support (14) comprises an I beam structure.

4. The escalator or moving walk support structure (10) of claim 3 wherein said truss support (14) includes a first fixed plate (17) on a bottom side of the bottom portion thereof and a second fixed plate (15) on a top side of a bottom portion thereof and said first sliding plate (18) is attached to said first fixed plate (17) and said second sliding plate (19) is attached to said second fixed plate (15).

5. The escalator or moving walk support structure (10) of claim 4 wherein the first and second sliding plates (18, 19) are connected by connection screws (38).

6. The escalator or moving walk support structure (10) of claim 5 wherein the connection screws (38) are screwed to a tightening torque of between about 40Nm and 80Nm.

7. The escalator or moving walk support structure (10) of claim 4 wherein the sliding plates (18, 19) are made of stainless steel, brass, copper, PTFE coated sheet materials, or white metal.

8. The escalator or moving walk support structure (10) of claim 1 further comprising side posts (50) arranged at each lateral end of the truss support (14), wherein said side posts (50) bear vertical forces acting on the support structure (10), and further comprising plate bearings (53) below said side posts (50) to allow lateral movement of the side posts (50) relative to the building support (28).

9. An escalator or moving walk support structure (10) comprising:
an escalator or moving walk truss support (14) having lateral slots (20, 21) therein;
at least one pair of sliding plates (18, 19), said sliding plates (18, 19) having mounting holes therein;
an intermediate vertical member (22) having a first end and a second end, **characterized in, that** said first end including a foot (34) and said second end being movably connected to a building support (28); and further comprising
at least two connection screws (38),
wherein said intermediate vertical member foot (36) is connected to said sliding plates (18, 19) by said connection screws (38) through said mounting holes, and connected to said support truss support (14) through said lateral slots (20, 21) and wherein said connection screws (38) are connected such that once a predetermined coefficient of friction is overcome, said intermediate vertical member (22) is free to move laterally with respect to said truss support (14).

10. The escalator or moving walk support structure (10) of claim 9 wherein said second end of said intermediate vertical member (22) is connected to the building support (28) between two resilient buffers (30, 32).

11. The escalator or moving walk support structure (10) of claim 9 wherein said second end of said intermediate vertical member (22) is connected to the building support (28) between two angle brackets (24, 26).

12. The escalator or moving walk support structure (10) of claim 9 wherein the connection screws (38) are screwed to a tightening torque of between about 40Nm and 80Nm.

13. The escalator or moving walk support structure (10) of claim 9 wherein the sliding plates (18, 19) are made of stainless steel, brass, copper, PTFE coated sheet materials, or white metal.

14. The escalator or moving walk support structure (10) of claim 10 wherein said second end of said resilient buffers (30, 32) are made of rubber.

15. The escalator or moving walk support structure (10) of claim 9 further comprising side posts (50) arranged at each lateral end of the truss support (14), wherein said side posts (50) bear vertical forces acting on the support structure (10), and further comprising plate bearings (53) below said side posts (50) to allow lateral movement of the side posts (50) relative to the building support (28).

16. The escalator or moving walk support structure (10) of claim 9, wherein said second end being movably connected to the building support (28) between two resilient buffers (30, 32).

17. The escalator or moving walk support structure (10) of claim 16 wherein said second end of said intermediate vertical member (22) is connected to the building support (28) between two angle brackets (24, 26).

## Patentansprüche

1. Stützkonstruktion (10) für eine Fahrtreppe oder einen Fahrsteig, umfassend:
eine Fahrtreppen- oder Fahrsteiggerüststütze (14), wobei die Gerüststütze (14) laterale Langlöcher (20, 21) darin aufweist;
ein vertikales Zwischenelement (22) mit einem ersten Ende und einem zweiten Ende, wobei das vertikale Zwischenelement (22) mit der Gerüststütze (14) durch die Langlöcher (20, 21) an dem ersten Ende davon und mit einer Gebäudestütze (28) an dem zweiten Ende davon derart verbunden ist, dass das vertikale Zwischenelement (22), sobald ein vorbestimmter Reibungskoeffizient überwunden ist, lateral in Bezug auf die Gerüststütze (14) frei beweglich ist,
**dadurch gekennzeichnet, dass** das erste Ende des vertikalen Zwischenelements (22) einen daran befestigten Fuß (34) einschließt, wobei der Fuß (34) mit einer ersten Gleitplatte (18) durch Verbindungsschrauben (38) verbunden ist, die sich durch die Gleitplatte (18) und die lateralen Langlöcher (20, 21) erstrecken.

2. Stützkonstruktion (10) für eine Fahrtreppe oder einen Fahrsteig nach Anspruch 1, ferner umfassend eine zweite Gleitplatte (19).

3. Stützkonstruktion (10) für eine Fahrtreppe oder einen Fahrsteig nach Anspruch 1, wobei die Gerüststütze (14) eine I-Profilkonstruktion umfasst.

4. Stützkonstruktion (10) für eine Fahrtreppe oder einen Fahrsteig nach Anspruch 3, wobei die Gerüststütze (14) eine erste feststehende Platte (17) an einer Unterseite des unteren Abschnitts davon und eine zweite feststehende Platte (15) an einer Oberseite eines unteren Abschnitts davon einschließt, und die erste Gleitplatte (18) an der ersten feststehenden Platte (17) befestigt ist und die zweite Gleitplatte (19) an der zweiten feststehenden Platte (15) befestigt ist.

5. Stützkonstruktion (10) für eine Fahrtreppe oder einen Fahrsteig nach Anspruch 4, wobei die erste und die zweite Gleitplatte (18, 19) durch Verbindungsschrauben (38) verbunden sind.

6. Stützkonstruktion (10) für eine Fahrtreppe oder einen Fahrsteig nach Anspruch 5, wobei die Verbindungsschrauben (38) mit einem Anziehdrehmoment zwischen 40Nm und 80Nm verschraubt sind.

7. Stützkonstruktion (10) für eine Fahrtreppe oder einen Fahrsteig nach Anspruch 4, wobei die Gleitplatten (18, 19) aus Edelstahl, Messing, Kupfer, PTFE-beschichteten Blechmaterialien oder Lagermetall hergestellt sind.

8. Stützkonstruktion (10) für eine Fahrtreppe oder einen Fahrsteig nach Anspruch 1, ferner umfassend Seitenpfosten (50), die an jedem lateralen Ende der Gerüststütze (14) angeordnet sind, wobei die Seitenpfosten (50) vertikale Kräfte, die auf die Gerüststütze (10) wirken, tragen, und ferner umfassend Plattenlager (53) unter den Seitenpfosten (50), um eine laterale Bewegung der Seitenpfosten (50) bezüglich der Gebäudestütze (28) zu ermöglichen.

9. Stützkonstruktion (10) für eine Fahrtreppe oder einen Fahrsteig, umfassend:
eine Fahrtreppen- oder Fahrsteiggerüststütze (14) mit lateralen Langlöchern (20, 21);
wenigstens ein Paar Gleitplatten (18, 19), wobei die Gleitplatten (18, 19) Montagelöcher aufweisen;
ein vertikales Zwischenelement (22) mit einem ersten Ende und einem zweiten Ende,
**dadurch gekennzeichnet, dass** das erste Ende einen Fuß (34) einschließt und das zweite Ende bewegbar mit einer Gebäudestütze (28) verbunden ist; und
ferner umfassend wenigstens zwei Verbindungsschrauben (38), wobei der Fuß (36) des vertikalen Zwischenelements durch die Verbindungsschrauben (38) mit den Gleitplatten (18, 19) durch die Montagelöcher verbunden ist, und mit der Stützgerüststütze (14) durch die seitlichen Langlöcher (20, 21) verbunden ist, und wobei die Verbindungsschrauben (38) derart verbunden sind, dass das vertikale Zwischenelement (22), sobald ein vorbestimmter Reibungskoeffizient überwunden ist, lateral in Bezug auf die Gerüststütze (14) frei beweglich ist.

10. Stützkonstruktion (10) für eine Fahrtreppe oder einen Fahrsteig nach Anspruch 9, wobei das zweite Ende des vertikalen Zwischenelements (22) mit der Gebäudestütze (28) zwischen zwei federnden Puffern (30, 32) verbunden ist.

11. Stützkonstruktion (10) für eine Fahrtreppe oder einen Fahrsteig nach Anspruch 9, wobei das zweite Ende des vertikalen Zwischenelements (22) mit der Gebäudestütze (28) zwischen zwei Haltewinkeln (24, 26) verbunden ist.

12. Stützkonstruktion (10) für eine Fahrtreppe oder einen Fahrsteig nach Anspruch 9, wobei die Verbindungsschrauben (38) mit einem Anziehdrehmoment zwischen 40Nm und 80Nm verschraubt sind.

13. Stützkonstruktion (10) für eine Fahrtreppe oder einen Fahrsteig nach Anspruch 9, wobei die Gleitplatten (18, 19) aus Edelstahl, Messing, Kupfer, PTFE-beschichteten Blechmaterialien oder Lagermetall hergestellt sind.

14. Stützkonstruktion (10) für eine Fahrtreppe oder einen Fahrsteig nach Anspruch 10, wobei das zweite Ende der federnden Puffer (30, 32) aus Kautschuk hergestellt ist.

15. Stützkonstruktion (10) für eine Fahrtreppe oder einen Fahrsteig nach Anspruch 9, ferner umfassend Seitenpfosten (50), die an jedem lateralen Ende der Gerüststütze (14) angeordnet sind, wobei die Seitenpfosten (50) vertikale Kräfte, die auf die Gerüststütze (10) wirken, tragen, und ferner umfassend Plattenlager (53) unter den Seitenpfosten (50), um eine laterale Bewegung der Seitenpfosten (50) bezüglich der Gebäudestütze (28) zu ermöglichen.

16. Stützkonstruktion (10) für eine Fahrtreppe oder einen Fahrsteig nach Anspruch 9, wobei das zweite Ende zwischen zwei elastischen Puffern (30, 32) bewegbar mit der Gebäudestütze (28) verbunden ist.

17. Stützkonstruktion (10) für eine Fahrtreppe oder einen Fahrsteig nach Anspruch 16, wobei das zweite Ende des vertikalen Zwischenelements (22) mit der Gebäudestütze (28) zwischen zwei Haltewinkeln (24, 26) verbunden ist.

## Revendications

1. Une structure de support d'escalier mécanique ou de trottoir roulant (10) comprenant :
un support d'armature en treillis d'escalier mécanique ou de trottoir roulant (14), ledit support d'armature en treillis (14) ayant des fentes latérales (20, 21) en son sein ;
un élément vertical intermédiaire (22) ayant une première extrémité et une seconde extrémité, ledit élément vertical intermédiaire (22) étant lié audit support d'armature en treillis (14) par l'intermédiaire desdites fentes (20, 21) à ladite première extrémité de celui-ci et à un support de construction (28) à ladite seconde extrémité de celui-ci de sorte qu'une fois qu'un coefficient de friction prédéterminé est dépassé, ledit élément vertical intermédiaire (22) peut se déplacer latéralement par rapport audit support d'armature en treillis (14), **caractérisé en ce que** ladite première extrémité dudit support vertical intermédiaire (22) comprend un pied (34) fixé à celui-ci, ledit pied (34) étant lié à une première plaque coulissante (18) par des vis de liaison (38) s'étendant à travers la plaque coulissante (18) et lesdites fentes latérales (20, 21).

2. Structure de support d'escalier mécanique ou de trottoir roulant (10) selon la revendication 1 comprenant en outre une deuxième plaque coulissante (19).

3. Structure de support d'escalier mécanique ou de trottoir roulant (10) selon la revendication 1, dans laquelle ledit support d'armature en treillis (14) comprend une structure de poutre en I.

4. Structure de support d'escalier mécanique ou de trottoir roulant (10) selon la revendication 3, dans laquelle ledit support d'armature en treillis (14) comprend une première plaque fixe (17) sur un côté inférieur de sa partie inférieure et une seconde plaque fixe (15) sur un côté supérieur de sa partie inférieure et ladite première plaque coulissante (18) est fixée à ladite première plaque fixe (17) et ladite seconde plaque coulissante (19) est fixée à ladite seconde plaque fixe (15).

5. Structure de support d'escalier mécanique ou de trottoir roulant (10) selon la revendication 4, dans laquelle les première et deuxième plaques coulissantes (18, 19) sont liées par des vis de liaison (38).

6. Structure de support d'escalier mécanique ou de trottoir roulant (10) selon la revendication 5, dans laquelle les vis de liaison (38) sont vissées selon un couple de serrage compris entre environ 40 Nm et 80 Nm.

7. Structure de support d'escalier mécanique ou de trottoir roulant (10) selon la revendication 4, dans laquelle les plaques coulissantes (18, 19) sont réalisées en acier inoxydable, laiton, cuivre, feuilles de matériau revêtues de PTFE ou en métal blanc.

8. Structure de support d'escalier mécanique ou de trottoir roulant (10) selon la revendication 1, comprenant en outre des montants latéraux (50) disposés à chaque extrémité latérale du support d'armature en treillis (14), dans laquelle lesdits montants latéraux (50) supportent des forces verticales agissant sur la structure de support (10), et comprenant en outre des plaques d'appui (53) sous lesdits montants latéraux (50) pour permettre un mouvement latéral des montants latéraux (50) par rapport au support de construction (28).

9. Structure de support d'escalier mécanique ou de trottoir roulant (10) comprenant :
un support d'armature en treillis d'escalier mécanique ou de trottoir roulant (14) ayant des fentes latérales à l'intérieur (20, 21) ;
au moins une paire de plaques coulissantes (18, 19), lesdites plaques coulissantes (18, 19) ayant des trous de montage à l'intérieur ;
un élément vertical intermédiaire (22) ayant une première extrémité et une seconde extrémité, **caractérisé en ce que** ladite première extrémité comprend un pied (34) et ladite seconde extrémité est liée de manière mobile au support de construction (28) ; et
comprenant en outre au moins deux vis de liaison (38),
dans laquelle ledit pied d'élément vertical intermédiaire (36) est lié auxdites plaques coulissantes (18, 19) par lesdites vis de liaison (38) à travers lesdits trous de montage, et lié audit support d'armature en treillis (14) par lesdites fentes latérales (20, 21) et dans laquelle lesdites vis de liaison (38) sont liées de sorte que, lorsqu'un coefficient prédéterminé de frottement est dépassé, ledit élément vertical intermédiaire (22) peut se déplacer latéralement par rapport audit support d'armature en treillis (14).

10. La structure de support d'escalier mécanique ou de trottoir roulant (10) selon la revendication 9, dans laquelle ladite seconde extrémité dudit élément vertical intermédiaire (22) est liée audit support de construction (28) entre deux tampons élastiques (30, 32).

11. La structure de support d'escalier mécanique ou de trottoir roulant (10) selon la revendication 9, dans laquelle ladite seconde extrémité dudit élément vertical intermédiaire (22) est liée au support de construction (28) entre deux équerres de fixation (24, 26).

12. Structure de support d'escalier mécanique ou de trottoir roulant (10) selon la revendication 9, dans laquelle les vis de liaison (38) sont vissées selon un couple de serrage compris entre environ 40 Nm et 80 Nm.

13. Structure de support d'escalier mécanique ou de trottoir roulant (10) selon la revendication 9, dans laquelle les plaques coulissantes (18, 19) sont réalisées en acier inoxydable, laiton, cuivre, feuilles de matériau revêtues de PTFE ou en métal blanc.

14. Structure de support d'escalier mécanique ou de trottoir roulant (10) selon la revendication 10, dans laquelle ladite seconde extrémité desdits tampons élastiques (30, 32) est faite de caoutchouc.

15. Structure de support d'escalier mécanique ou de trottoir roulant (10) selon la revendication 9, comprenant en outre des montants latéraux (50) disposés à chaque extrémité latérale du support d'armature en treillis (14), dans laquelle lesdits montants latéraux (50) supportent des forces verticales agissant sur la structure de support (10), et comprenant en outre des plaques d'appui (53) sous lesdits montants latéraux (50) pour permettre un mouvement latéral des montants latéraux (50) par rapport au support de construction (28).

16. Structure de support d'escalier mécanique ou de trottoir roulant (10) selon la revendication 9, dans laquelle ladite seconde extrémité est liée de manière mobile au support de construction (28) entre deux tampons élastiques (30, 32).

17. La structure de support d'escalier mécanique ou de trottoir roulant (10) selon la revendication 16, dans laquelle ladite seconde extrémité dudit élément vertical intermédiaire (22) est liée au support de construction (28) entre deux équerres de fixation (24, 26).
